# NEW EUROPEAN PATENT SPECIFICATION

(11) **EP 0 785 236 B2**
(45) Date of publication and mention of the opposition decision: **12.08.2009**
(45) Mention of the grant of the patent: 15.10.2003
(21) Application number: 97100641.6
(22) Date of filing: 16.01.1997
(51) Int. Cl.: C08L 83/04

(54) **Curable silicone compositions**
Härtbare Siliconzusammensetzungen
Compositions de silicone réticulables

(30) Priority: 17.01.1996 US 587625
(43) Date of publication of application: 23.07.1997
(73) Proprietor: Dow Corning Corporation, Midland, Michigan 48686-0994 (US)
(72) Inventor: Juen, Donnie Ray, Sanford, Michigan 48657 (US); Rapson, Lawrence Joseph, Bay City, Michigan 48708 (US); Nicholson, William Rosser, Midland, Michigan 48642 (US)
(74) Representative: Spott, Gottfried

(56) References cited:
- EP-A- 0 416 229
- EP-A- 0 506 241
- US-A- 5 279 894
- US-A- 5 310 869
- W.NOLL: ' Chemie und Technologie Silico', VERLAG CHEMIE 1968, WEINHEIM pages 218 - 219

## Description

This invention relates to curable silicone compositions which provide high strength elastomer foams. These elastomer foams have high strength properties which are provided by a combination of organopolysiloxanes as the base polymer. The high strength properties are comparable to, or better than, the high strength properties of cured silicone compositions found in the art, but have the benefit of being less expensive to prepare.

Foamable compositions and curable elastomer compositions are well known in the art. They typically comprise a curable hydroxyl-containing polyorgansiloxane base polymer, an organohydrogensiloxane crosslinker and a curing catalyst. Foamable compositions are generally represented by.U.S. Patent 3,923,705 and U.S. Patent 5,414,023.

Curable elastomer compositions are represented by U.S. Patents 5,279,894; 4,590,222; 4,487,906; 5,011,865 and U.S. 5,162,397.

US 4 879 317 discloses silicone foam compositions comprising an aqueous mixture of a C₂ to C₈ alkanol as a blowing agent.

U.S. Patent 5,279,894 discloses the use of additional siloxane polymers in curable elastomer compositions; namely, the use of a low viscosity dimethylvinyl chain-stopped dimethyl polysiloxane that allegedly is used as a diluent and a "branched chain" polymer, which is actually a resinous material, used to achieve adhesiveness for the composition.

The latter material is often referred-to as "resin reinforced polymer". Such use however does not anticipate our claimed invention, nor make it obvious, because the so-called "branched chain" polymer is actually a resin and there are no base polymer resinous materials required in our invention. Moreover, there is no suggestion in the aforementioned patent to combine the specific siloxane materials of the instant invention, in the combinations disclosed herein, to obtain the unexpected benefits we have found.

In foamed materials according to the invention, higher strength foams are prepared as shown by our tensile and tear measurements for this invetion.

EP-A-0 506 241 discloses a multi-component, foamable silicone composition comprising (A) one or more polydiorganosiloxanes having not less than three alkylhydrogensiloxane units per molecule, (B) one or more polydiorganosiloxanes having not less than two unsaturated hydrocarbon groups, (C) a liquid alcohol, (D) a fluorinated silicone foam stabilizing material and (E) a platinum catalyst.

US-A-5 310 869 discloses a recording medium comprising a substrate having applied to at least one surface thereof a composition comprising a cured polymeric silicone matrix consisting essentially of the reaction product of:
a. a first polysiloxane component having a molecular weight in excess of; 300,000 and comprising substantially linear chains of substituted siloxane units, some of which units contain, as substituents, at least one reactive functional group, each functional group being randomly interspersed in each first-component chain;
b. a second polysiloxane component having a molecular weight in excess of .5,000 but no greater than 70,000 and comprising substantially linear chains of substituted siloxane units, each of which is capped by terminal siloxane units that each contain, as substituents, at least one reactive functional group; and
c. a specific crosslinking component
d. wherein the relative weight proportion of the first component to the second component is at least 10% and no more than 90%.

US-A-5 279 894 discloses a liquid layer on a solid surface, said layer comprising a curable composition suitable for use as a non-burnable, fire blocking adhesive comprising:
a) a mixture of polysiloxane polymers comprising a straight chain component and a branched chain component, each having vinyl unsaturation,
b) a platinum catalyst,
c) a liquid organohydrogen polysiloxane cross-linking agent,
d) at least one low viscosity dimethylvinyl chain-stopped dimethyl polysiloxane, and
e) alumina trihydrate.

This invention introduces curable silicone compositions which provide high strength foams. Such properties, are provided by our specific combinations of non-resinous vinyl-containing siloxane polymers having a combination of high and low molecular weights.

This invention is high strength curable silicone foam compositions as claimed in claims 1 to 4.

The essence of this invention is the combination of. polymers -to- form the base polymer system, selected from (A)(i) and any of the polymers from (A)(ii) a-d to provide enhanced physical properties. For this invention, any reference to molecular weight in this specification and claims is based on grams/mole.

The crosslinking, or curing agent (B), is one which contains at least one organohydrogensiloxane that supplies the silicon-bonded hydrogen atoms required to cure our composition. The organohydrogensiloxane can have a linear or branched structure and is selected from homopolymers, copolymers or mixtures of these polymers.

A preferred linear organohydrogensiloxane has a viscosity of from 0.01 to 10 Pa·s at 25° and comprises dialkylsiloxane and alkylhydrogensiloxane units with trialkylsiloxy.terminal units. The alkyl radicals contain from 1 to 4 carbon atoms and are most preferably methyl.

Preferred compositions contain two types of organohydrogensiloxanes, one of which is a polymethylhydrogensiloxane and the second a copolymer containing methylhydrogensiloxane and dimethylsiloxane units.

The relative amounts of each of the components A and B is a weight ratio of from 20:1 to 1:10. A preferred ratio is from 16:1 to 4:1 and the most preferred ratio is 8:1.

Component C is a metal from the platinum group of the periodic table or a compound of such a metal. These metals include platinum, palladium and rhodium. Platinum and platinum compounds are preferred based on the high activity level of these catalysts in hydrosilation reactions. Examples of preferred curing catalysts are platinum black, platinum metal on various solid supports, chloroplatinic acid, alcohol solutions of chloroplatinic acid and complexes of chloroplatinic acid with liquid ethylenically unsaturated compounds such as olefins and organosiloxanes containing ethylenically unsaturated hydrocarbon radicals bonded to silicon. Complexes of chloroplatinic acid with the aforementioned organosiloxanes, containing ethylenically unsaturated hydrocarbon radicals, are described in U.S. Patent 3,419,593, which teaches our preferred catalysts.

The concentration of ingredient C is equivalent to a platinum group metal concentration of from 0.1 to 500 parts by weight of platinum group metal, preferably from 5 to 100 parts by weight of platinum group metal, per million parts (ppm), based on the combined weight of ingredients A and B.

Curing does not proceed satisfactorily at below 0.1 ppm of platinum, while using more than 500 ppm results in no appreciable increase in cure rate and is therefore uneconomical.

Components A(i) and A(ii)a-d are available polysiloxanes and methods for their preparation are known to those skilled in the art. Moreover, some of those methods are set forth in the U.S. Patents cited supra. It is not deemed necessary, therefore, to set forth in intimate detail, the preparation of such materials in this specification.

Components A(i) are high molecular weight diorganopolysiloxanes which have essentially all of the vinyl in the molecule located at both terminals. By "essentially", it is meant that the polymers have little or no vinyl groups which are pendant along the siloxane chain of such molecules. Such polysiloxanes are primarily dialkyl substituted diorganopolysiloxanes having diverse end blocking groups, such as 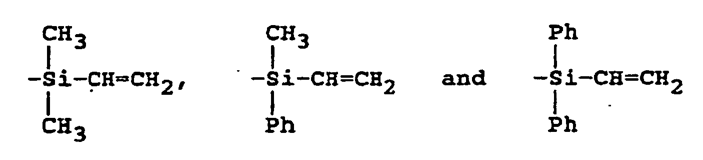 and the like, where Ph is, and hereafter represents, the phenyl radical.

Preferred for this invention are the dimethylvinylsiloxy and methylphenylvinylsiloxy endblocking groups, while most preferred is dimethylvinylsiloxy endblocking. For this invention, the term "high molecular weight" of A(i) refers to a molecular weight in the range of 30,000 to 1,000,000 having vinyl contents in the range of 0.01 to 0.16 weight percent.

The components A(ii)a-d, our second set of siloxane polymers containing vinyl groups, are well-known siloxanes and are selected from the groups consisting of (a) low molecular weight siloxane polymers having vinyl groups which are located in only pendant positions on the siloxane chain; (b) low molecular weight siloxane polymers having vinyl groups which are located at both pendant positions on the siloxane chain and at the terminals thereof; (c) high molecular weight siloxane polymers having vinyl groups which are located in only pendant positions on the siloxane chains; and (d) high molecular weight siloxane polymers having vinyl groups which are located at both pendant positions on the siloxane chain and at the terminals thereof.

For illustration purposes, the following types of polymers are among those intended for the definitions supra:
A (i) is 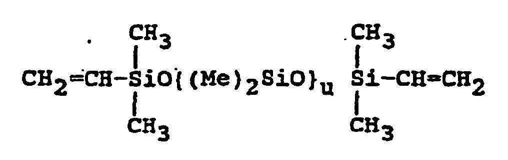 wherein Me is the methyl radical and u has a value such that it provides a molecular weight in the range set forth for A(i), supra.
A(i)' is within the molecular weight range stated in A(i) but u has a value such that it provides an example on the lower end of the molecular weight range of A(i), on the order of 38,000 g/mole.
A(ii)a is (Me₃)SiO{Me(CH₂=CH)SiO}ᵥSi(Me₃) or (Me₃)SiO{Me(CH₂=CH)SiO}ᵥ{(Me₂)SiO}_{w}Si(Me₃) wherein Me is, and hereafter represents, the methyl radical and v and w have values such that they provide a molecular weight in the range set forth for A(ii)a, infra.
A(ii)b is (CH₂=CH)(Me₂)SiO{Me(CH₂=CH)SiO}ₓSi(Me₂)(CH=CH₂) or (CH₂=CH)(Me₂)SiO{Me(CH₂=CH)SiO}ₓ{(Me₂)SiO}_{y}Si(Me₂)(CH=CH₂) wherein x and y have values such that they provide a molecular weight in the range set forth for A(ii)b, infra.
A(ii)c is the same types of molecules as those set forth for A(ii)a, supra, except the values of v and w are such that they provide a molecular weight in the range set forth for A(ii)c, infra.
A(ii)d is the same type of molecules as those set forth for A(ii)b, supra, except the values of x and y are such that they provide a molecular weight in the range set forth for A(ii)d, infra.

With regard to the A(ii)a and b polymers, the molecular weight ranges from 272 to 40,000 and the vinyl contents range from 0.2 to 55.1 weight percent. Further, the molecular weight range for A(ii)c and A(ii)d polymers is from 40,000 to 1,000,000 and the vinyl content ranges from 0.01 to 55.1 weight percent.

The amount of A(i), and the particular A(ii) polymers to be used, are dependent on the particular combination used. For example, the weight ratio of A(i) to A(ii)a or A(ii)b is essentially the same and is from 99.7:0.3 to 5:95. A preferred ratio is from 95:5 to 30:70, and the most preferred ratio is from 90:10 to 60:40.

For combinations of A(i) to A(ii)c or A(ii)d, the weight ratio is from 95:5 to 5:95, a preferred ratio is from 90:10 to 30:70, and the most preferred ratio is from 85:15 to 60:40.

Other optional ingredients can be used with the compositions of this invention provided they do not interfere with cure or destroy the desired physical properties of our final cured materials.

Such optional materials can modify other properties of the cured materials or they can aid in the preparation of them. For example, these materials include reinforcing and non-reinforcing mineral fillers, such as quartz and calcium carbonate; metal oxides such as alumina, hydrated alumina, ferric oxide and titanium dioxide; pigments such as carbon black and zinc oxide; organic pigments and dyes; anti-oxidants; heat stabilizers; ultraviolet stabilizers; flame retarding agents and catalyst inhibitors, such as cyclic methylvinylsiloxanes to increase the working time of the curable composition; blowing agents to form foams and the like.

Frequently used optional ingredients in our compositions are resinous organosiloxane copolymers containing triorganosiloxy and SiO_{4/2} units. The triorganosiloxy units in this copolymer are represented by the formula R³₃SiO_{1/2}, wherein R³ represents a monovalent unsubstituted or substituted hydrocarbon radical. In preferred copolymers, the hydrocarbon radicals represented by R³ are a combination of lower alkyl groups having 1-6 carbon atoms, most preferably methyl. The molar ratio of triorganosiloxy units to SiO_{4/2} units in the copolymer is typically from 0.5 to 1.6, inclusive. The copolymer constitutes up to 30 percent of the combined weight of the copolymer and curable composition. At least a portion of the silicon atoms in the copolymer contain ethylenically unsaturated hydrocarbon radicals such as vinyl.

The curable compositions of this invention are prepared by blending the ingredients of our compositions to homogeneity. The present compositions begin to cure and foam, when the ingredients are combined in this manner. If it is desired to store the compositions prior to curing and/or foaming, this is achieved by packaging the ingredients in two or more containers with at least the organohydrogensiloxane and curing catalyst in separate containers. The presently claimed compositions lend themselves to being packaged in three, four or more separate containers for blending by mechanical equipment.

Both curing and foaming reactions are accelerated by heating the curable compositions. Reaction temperatures for the foam are from 55 to 200°C. Most preferred is a temperature of 65 to 90°C. The time required for curing and foaming of the present compositions is typically from 0.5 to 60 minutes, based on the reactivity of the ingredients and the temperatures used and 0.5 to 24 hours for the elastomers.

The following examples describe preferred embodiments of the present compositions as defined in the accompanying claims. All parts and percentages in the examples are by weight and all viscosities were measured at 25°C.

The following materials were used in the examples.

Component (A)i = ViMe₂ SiO(Me₂ SiO)ₓ SiMe₂Vi, having a viscosity of 50,000 to 70,000 mPa·s (cps), a high molecular weight vinyl terminated polymer.

Component A(i) which is within the molecular weight range stated in A(i) but x has a value such that it provides an example on the lower end of the molecular weight range of A(i), on the order of 38,000 g/mole.

Component A(ii)b = ViMe₂ SiO(MeViSiO)ₐ (Me₂ SiO)_{b} SiMe₂Vi which has a viscosity of 350 mPa·s (cps) at 25°C, a degree of polymerization of 128, a molecular weight of 9500 g/mole and a weight percent vinyl content of 1.18 and which is a low molecular weight vinyl pendant and vinyl terminated polymer.

Component A(ii)c = Me₃SiO(Me₂ SiO)ₓ(MeViSiO)_{y}SiMe₃ having 0.5 weight percent vinyl content and a viscosity of 45,000 mPa·s (cps) at 25°C. and which is a high molecular weight vinyl pendant polymer.

Component A(ii)e = ViMe₂SiO(Me₂SiO)ₓSiMe₂Vi having a viscosity of 450 mPa·s (cps) at 25°C. which is a low molecular weight vinyl terminated polymer.

Component B(i) = A material prepared by the processes of U.S. Patent 4,322,518 and which has an SiH content of 0.76 weight percent.

Component B(ii) = Me₃ SiO(Me₂ SiO)ₓ(MeHSiO)_{y}SiMe₃ having 0.76 weight percent of SiH, x is 3 and y is 5.

Component C = a hydrosilation catalyst.

Component D = benzyl alcohol as a blowing agent.

Component E = 5 µm quartz filler.

Component F = a commercial fire retardant.

Component G = an inhibitor of (MeViSiO)x which is a cyclic siloxane tetramer.

### Example 1 (FOAM)

Using the above materials, the samples were fashioned by preparing a first composition by mixing together components A(i) and one or more of the components A(ii) with components, C, D, E and F. This is used as the base, part 1. A second composition was prepared by mixing together one or more components B, a small amount of A(i) as a carrier and, in some cases, an inhibitor (G) for the SiH to vinyl addition reaction. This is used as the curing agent, part 2.

Samples were prepared for testing by hand mixing base and curing agent at a 10:1 ratio for sixty seconds. The foam was then poured on to polyester sheet and then sandwiched between another sheet of polyester. The desired thickness was achieved by pushing the material out using a non-flexible tube supported by shims. The sheeted foam was then cured for five minutes at 54°C. and then four minutes at 100°C. It was then post cured for ten minutes at 190°C and allowed to return to room temperature. A tensiometer (Monsanto^{TM} T-2000, Monsanto Company, Monsanto Instruments & Equipment, Akron OH 44314) was used to test tensile, tear and elongation. Tensile bars were prepared using tensile die A. Tear bars were prepared with a tear C die. All bars were pulled at 50.8 cm (20 inches) per minute (ASTM D 412). This testing also gave the elongation results. Sheet density was determined by cutting a 7.6 x 7.6 cm (3" x 3") square from near the center of the sheeted foam. The thickness of the foam was then measured five (5) times across the sheet. Measurements were taken at the four corners and the center of the sample, using a sylvac^{TM} system digital micrometer to 0.001 mm. The weight was measured on a Mettler^{TM} scale to 0.01 g.

The foam compositions are shown on Table I. The results of physical testing are shown on Table II. Samples 1,. 2, 3 and 9 are outside of this invention because they use only one polymer in the base, part 1.

**TABLE I**

| Part 1 | | | | | | | | |
|---|---|---|---|---|---|---|---|---|
| **Wt% COMP** | **SAMP1** | **SAMP2** | **SAMP3** | **SAMP4** | **SAMP5** | **SAMP6** | **SAMP7 ⁽¹⁾** | **SAMP8 ⁽¹⁾** |
| A(i) | 72.92 | | | 54.7 | | 54.7 | 54.7 | 55.84 |
| A(ii)b | | 72.92 | | 18.22 | 18.22 | | | |
| A(i)' | | | | | 54.7 | | | |
| A(ii)e | | | | | | | 18.22 | 18.60 |
| A(ii)c | | | 72.92 | | | 18.22 | | |
| E | 14.50 | 14.50 | 14.50 | 14.50 | 14.50 | 14.50 | 14.50 | 14.81 |
| F | 8.19 | 8.19 | 8.19 | 8.19 | 8.19 | 8.19 | 8.19 | 8.36 |
| D | 4.00 | 4.00 | 4.00 | 4.00 | 4.00 | 4.00 | 4.00 | 2.00 |
| C | 0.39 | 0.39 | 0.39 | 0.39 | 0.39 | 0.39 | 0.39 | 0.39 |

| Part 2 | | | | | | | | |
|---|---|---|---|---|---|---|---|---|
| B(i) | 71.30 | 71.30 | 71.30 | 71.30 | 71.30 | 71.30 | 71.30 | 71.30 |
| B(ii) | 24.00 | 24.00 | 24.00 | 24.00 | 24.00 | 24.00 | 24.00 | 24.00 |
| A(i) | 4.45 | 4.70 | 4.45 | 4.45 | 4.70 | 4.45 | 4.45 | 4.45 |
| G | 0.25 | | 0.25 | 0.25 | | 0.25 | 0.25 | 0.25 |

| | | | | | | | | |
|---|---|---|---|---|---|---|---|---|
| (1) does not fall within the scope of the present invention | | | | | | | | |

**TABLE II**

| **Physical Properties** | | | | | | | | |
|---|---|---|---|---|---|---|---|---|
| | **SAM1** | **SAM2** | **SAM3** | **SAM4** | **SAM5** | **SAM6** | **SAM7 ⁽¹⁾** | **SAM8 ⁽¹⁾** |
| Sheet density g/cm³ | 0.20 | 0.41 | 0.28 | 0.21 | 0.21 | 0.19 | 0.17 | 0.24 |
| Tensile kPa | 46.9 | 62.7 | 63.4 | 90.3 | 77.9 | 60.7 | 54.5 | 95.8 |
| Tear C kN/m | 0.32 | 0.19 | 0.19 | 0.42 | 0.33 | 0.44 | 0.28 | 0.46 |
| Elongation % | 170 | 3.0 | 13.0 | 72.4 | 53.0 | 104.0 | 119 | 97 |

| | | | | | | | | |
|---|---|---|---|---|---|---|---|---|
| (1) does not fall within the scope of the present invention | | | | | | | | |

### Example 2 (ELASTOMER) (Reference Example)

The elastomer samples were made by preparing a first composition by mixing together components A(i), and one or more of the components A(ii), with components C, E and pigment. This is part 1.

A second composition was prepared by mixing together compositions A(i), and one or more of the components A(ii), with components B(ii) and E, and in some cases an inhibitor was added for the -SiH to vinyl addition reaction, (G). This is part 2.

Part 1 and Part 2 were mixed together at a 1:1 ratio by weight. They were stirred together by hand until the two parts were homogeneous in color. The material was then poured into a 10.16 cm. x 15.24 cm. x 0.19 cm. (4" x 6" x 0.075") chase. The chase was backed with waxed butcher paper, which acted as a release coating. The chase was then deaired and placed into a Dake^{TM} press to achieve the desired thickness. The slab was then cured for 24 hours at room temperature. Tensile, elongation and tear tests were based on ASTM D 412. Tensile and elongation were tested at 50.8 cm. (20 inches) per minute. The tensile die was 6.35 mm (0.25") and the tear die was tear die B. Durometer was based on ASTM D 2240.

Several samples of materials were prepared in which the two polymeric materials were varied in weight percent to show the effect on the physical properties of the elastomer.

The two materials were A(i) and A(ii)b. SAMPLE 9 is 100% A(i) and 0% A(ii)b. SAMPLE 10 is 96% A(i) and 4% A(ii)b. SAMPLE 11 is 93% A(i) and 7% A(ii)b. SAMPLE 12 is 88% A(i) and 12% A(ii)b and SAMPLE 13 is 83% A(i) and 17% of A(ii)b. The formulations are found on Table III and the testing results are given in TABLE IV. Viscosity was based on ASTM D 1084 and Snap was based on Mil-S-23586. Tack free testing was based on the amount of time it took for curing such that the composition could be touched with a finger and the finger removed without a portion of the composition remaining on the finger.

**TABLE III**

| COMPONENTS Weight % | **SAMP9** | **SAMP10** | **SAMP11** | **SAMP12** | **SAMP13** |
|---|---|---|---|---|---|
| A(i) | 65.17 | 62.57 | 60.61 | 57.30 | 54.09 |
| A(ii)b | 0 | 2.6 | 4.56 | 7.82 | 11.18 |
| E | 33.00 | 32.71 | 32.46 | 32.05 | 31.64 |
| C | 0.5 | 0.5 | 0.5 | 0.5 | 0.5 |
| B(ii) | 0.83 | 1.12 | 1.36 | 1.77 | 2.18 |
| pigment | 0.5 | 0.5 | 0.5 | 0.5 | 0.5 |
| Viscosity Avg (Pa.s) | 140.8 | 119.0 | 109.8 | 90.6 | 76.4 |
| Snap time (min:sec) | 5:00 | 5:30 | 5:30 | 5:30 | 7:40 |
| Tack Free Time (min) | 13 | 15 | 17 | 17 | 25 |

**TABLE IV**

| **Physical property** | **SAMP9** | **SAMP10** | **SAMP11** | **SAMP12** | **SAMP13** |
|---|---|---|---|---|---|
| Tensile (mPa) | 1.06 | 1.98 | 2.23 | 2.81 | 3.13 |
| Elongation % | 239 | 281 | 265 | 231 | 210 |
| Durometer | 21 | 23 | 24 | 28 | 30 |
| Tear die B (kN/m) | 3.9 | 3.4 | 3.3 | 3.6 | 3.4 |
| 100% Modulus (kPa) | 453 | 528 | 585.4 | 755.7 | 1077 |

## Claims

1. A curable silicone composition comprising
A) a diorganopolysiloxane base polymer system in which the polymers contain at least two vinyl groups per molecule which is a combination of:
(i) siloxane polymers with a molecular weight range of 30,000 to 1,000,000 grams/mole containing vinyl groups only at the terminals thereof having vinyl content in the range of 0.01 to 0.16 weight percent,
(ii) second siloxane polymers containing vinyl groups selected from the group consisting of:
a. siloxane polymers with a molecular weight range of 272 to 40,000 grams/mole containing vinyl groups which are located in only pendant positions having vinyl content in the rage of 0.2 to 55.1 weight percent,
b. siloxane polymers with a molecular weight range of 272 to 40;600 grams/mole containing vinyl groups which are located at both pendant positions and terminal positions thereof having vinyl content in the range of 0.2 to 55.1 weight percent,
c. siloxane polymers with a molecular weight range of 40,000 to 1,000,000 grams/mole containing vinyl groups which are located at only pendant positions thereof having vinyl content in the range of 0.01 to 55.1 weight percent,
d. siloxane polymers with a molecular weight of 40,000 to 1,000,000 grams/mole containing vinyl groups which are located at both pendant positions and terminals thereof having vinyl content in the range of 0.01 to 55.1 weight percent,
where the weight ratio of A(i) to A(ii)a or A(ii)b is from 99.7:0.3 to 5:95, the weight ratio of A(i) to A(ii)c or A(ii) d is from 95:5 to 5:95,
B) a silicon-containing crosslinker for the silicone base polymer system, said crosslinker containing at least two -SiH groups per molecule, the relative amounts of each of the components A and B having a weight ratio of from 20:1 to 1:10;
C) a platinum group metal catalyst for curing the silicone composition at a concentration of from 0.1 to 500 parts by weight of platinum metal per million parts (ppm) based on the combined weight of ingredients A and B; and
D) at least one blowing agent to generate a foam, whereby the at least one blowing agent comprises benzyl alcohol.

2. A composition as claimed in claim 1 wherein there is additionally present at least one catalyst inhibitor.

3. A composition as claimed in claim 1 wherein there is additionally present at least one filler.

4. A composition as claimed in claim 1 wherein there is additionally present at least one foam stabilizing additive.

## Patentansprüche

1. Härtbare Siliconzusammensetzung, die die folgenden Bestandteile umfasst:
A) eine Diorganopolysiloxanbasispolymersystem, worin die Polymere mindestens 2 Vinylgruppen pro Molekül enthalten, wobei es sich um eine Kombination aus den folgenden Bestandteilen handelt:
(i) Siloxanpolymere mit einem Molekulargewichtsbereich von 30.000 bis 1.000.000 g/mol mit Vinylgruppen lediglich an ihren Enden mit einem Vinylgehalt im Bereich von 0,01 bis 0,16 Gew.%,
(ii) zweite Siloxanpolymere, die Vinylgruppen enthalten, ausgewählt aus der folgenden Gruppe:
a. Siloxanpolymere mit einem Molekulargewichtsbereich von 272 bis 40.000 g/mol mit Vinylgruppen, die sich lediglich in an dem Gerüst hängenden Positionen befinden, mit einem Vinylgehalt im Bereich von 0,2 bis 55,1 Gew.%,
b. Siloxanpolymere mit einem Molekulargewichtsbereich von 272 bis 40.000 g/mol mit Vinylgruppen, die sich sowohl in an dem Gerüst hängenden Positionen als auch an terminalen Positionen befinden, mit einem Vinylgehalt im Bereich von 0,2 bis 55,1 Gew.%,
c. Siloxanpolymere mit einem Molekulargewichtsbereich von 40.000 bis 1.000.000 g/mol mit Vinylgruppen, die sich lediglich in am Gerüst hängenden Positionen befinden, mit einem Vinylgehalt im Bereich von 0,01 bis 55 Gew.-%,
d. Siloxanpolymere mit einem Molekulargewichtsbereich von 40.000 bis 1.000.000 g/mol mit Vinylgruppen, die sich sowohl in am Gerüst hängenden Positionen als auch an den Enden befinden, mit einem Vinylgehalt im Bereich von 0,01 bis 55,1 Gew.%,
wobei das Gewichtsverhältnis von A(i) zu A(ii)a oder A(ii)b im Bereich von 99,7:0,3 bis 5:95 liegt und das Gewichtsverhältnis von A(i) zu A(ii)c oder A(ii)d im Bereich von 95:5 bis 5:95 liegt,
B) ein Silicium-haltiges Vernetzungsmittel für das Siliconbasispolymersystem, das mindestens zwei -SiH-Gruppen pro Molekül enthält, wobei die relativen Mengen einer jeden der Komponente A und B ein Gewichtsverhältnis von 20:1 bis 1:10 aufweisen,
C) ein Platingruppenmetallkatalysator zur Härtung der Siliconzusammensetzung in einer Konzentration von k0,1 bis 500 Gewichtsteilen Platinmetall pro 1.000.000 Teile (ppm), bezogen auf das Gesamtgewicht der Bestandteile A und B, und
D) mindestens ein Treibmittel zum Erzeugen eines Schaums, worin das mindestens eine Treibmittel Benzylalkohol ist.

2. Zusammensetzung nach Anspruch 1, worin zusätzlich mindestens ein Katalysatorhemmstoff vorhanden ist.

3. Zusammensetzung nach Anspruch 1, worin zusätzlich mindestens ein Füllstoff vorhanden ist.

4. Zusammensetzung nach Anspruch 1, worin zusätzlich mindestens ein Schaumstabilisierungsadditiv vorhanden ist.

## Revendications

1. Composition de silicone réticulable comprenant
A) un système polymère à base de diorganopolysiloxane dans lequel les polymères contiennent au moins deux groupes vinyle par molécule qui est une combinaison:
(i) de polymères de siloxane avec un intervalle de poids moléculaire de 30 000 à 1 000 000 grammes/mole contenant des groupes vinyle uniquement aux terminaisons de ceux-ci ayant une teneur en groupe vinyle dans l'intervalle de 0,01 à 0,16 pour-cent en poids,
(ii) de seconds polymères de siloxane contenant des groupes vinyle choisis parmi :
a. des polymères de siloxane avec un intervalle de poids moléculaire de 272 à 40 000 grammes/mole contenant des groupes vinyle qui sont disposés uniquement aux positions suspendues de ceux-ci ayant une teneur en groupe vinyle dans l'intervalle de 0,2 à 55,1 pour-cent en poids,
b. des polymères de siloxane avec un intervalle de poids moléculaire de 272 à 40 000 grammes/mole contentant des groupes vinyle qui sont disposés à la fois aux positions suspendues et aux terminaisons de ceux-ci ayant une teneur en groupe vinyle dans l'intervalle de 0,2 à 55,1 pour-cent en poids,
c. des polymères de siloxane avec un intervalle de poids moléculaire de 40 000 à 1 000 000 grammes/mole contenant des groupes vinyle qui sont disposés uniquement aux positions suspendues de ceux-ci ayant une teneur en groupe vinyle dans l'intervalle de 0,01 à 55,1 pour-cent en poids,
d. des polymères de siloxane avec un poids moléculaire de 40 000 à 1 000 000 grammes/mole contenant des groupes vinyle qui sont disposés à la fois aux positions suspendues et aux terminaisons de ceux-ci ayant une teneur en groupe vinyle dans l'intervalle de 0,01 à 55,1 pour-cent en poids,
dans laquelle le rapport massique de A(i) à A(ii)a ou à A(ii)b est de 99.7:0.3 à 5:95, le rapport massique de A(i) à A(ii)c ou à A(ii)d est de 95:5 à 5:95,
B) un agent de réticulation contenant du silicium pour le système polymère à base de silicone, ledit agent de réticulation contenant au moins deux groupes -SiH par molécule, les quantités relatives de chacun des constituants A et B ayant un rapport massique de 20:1 à 1:10;
C) un catalyseur métallique du groupe du platine pour réticuler la composition de silicone à une concentration de 0,1 à 500 parties en poids de métal de platine par partie par million (ppm) rapportée au poids combiné des ingrédients A et B, et
D) au moins un agent gonflant pour produire une mousse, dans laquelle au moins un agent gonflant est alcohol benzylique.

2. Composition selon la revendication 1, dans laquelle au moins un inhibiteur de catalyseur est en plus présent.

3. Composition selon la revendication 1, dans laquelle au moins une charge est en plus présente.

4. Composition selon la revendication 1, dans laquelle au moins un additif stabilisateur de mousse est en plus présent.
